# EUROPEAN PATENT SPECIFICATION

(11) **EP 3 572 896 B1**
(45) Date of publication and mention of the grant of the patent: **28.09.2022**
(21) Application number: 18184201.4
(22) Date of filing: 18.07.2018
(51) Int. Cl.: G05D 1/00, G05D 1/02, B60W 60/00, G01C 21/30

(54) **AUTOMATIC DRIVING METHOD AND DEVICE**
AUTOMATISCHES FAHRVERFAHREN UND VORRICHTUNG
PROCÉDÉ ET DISPOSITIF DE CONDUITE AUTOMATIQUE

(30) Priority: 25.05.2018 CN 201810516041
(43) Date of publication of application: 27.11.2019
(73) Proprietor: Neusoft Reach Automotive Technology (Shanghai) Co., Ltd., 201801 Jiading District/Shanghai (CN)
(72) Inventor: LIU, Wei, Liaoning, 110179 (CN); LIU, Wei, Liaoning, 110179 (CN)
(74) Representative: Eisenführ Speiser

(56) References cited:
- EP-A2- 1 012 537
- EP-B1- 1 012 537
- US-A1- 2016 047 660
- US-A1- 2018 024 562

## Description

### CROSS REFERENCE OF RELATED APPLICATION

The present application claims priority to Chinese Patent Application No. 201810516041.4, titled "AUTOMATIC DRIVING METHOD AND DEVICE", filed on May 25, 2018 with the state intellectual property office of People's Republic of China.

### FIELD

The present disclosure relates to the technical field of vehicle, and in particular to an automatic driving method and an automatic driving device.

### BACKGROUND

US 2016/047660 A1 discloses a method for automatically driving a predetermined route including the steps of scanning route data and environmental data while the route is being driven manually, determining an automatic driving strategy based on the scanned data, comparing the automatic driving strategy to the manual driving strategy and enabling the automatic driving of the route if the automatic driving strategy differs by less than a predetermined measure from the manual driving strategy.

In daily driving, a driver may frequently drive a vehicle on a fixed route. For example, if the driver is an employee, he may usually drive a car on roads to and from the work, which form a fixed route. For another example, if a driver usually drives a car to a nearby shopping mall or supermarket for shopping, the roads between his house and the shopping place form a fixed route. The driver may feel tired due to repeated and tedious driving actions since he drives the vehicle on these fixed routes repeatedly for a long time, thereby affecting the driving experience.

When driving on the fixed route, the driver has to continuously pay attention to the real-time changes on the route, so as to control the vehicle better. At present, a high-precision map is often used to assist the driver. However, the application of the high-precision map also has many limitations. For example, since the high-precision map is a map including all routes, it contains a large amount of data, which is unfavorable for local storage. In addition, since the road facilities are changed quickly, the high-precision map cannot meet actual requirements of driving on a fixed route. Moreover, since the route frequently used by the driver is a fixed route, most data of the high-precision map is useless but requires a large storage. Furthermore, in some countries and regions, the high-precision map may be restricted by laws and regulations to have a low resolution. Moreover, a navigation route calculated by a navigation system may deviate from an actual route.

### SUMMARY

An automatic driving method and an automatic driving device are provided according to embodiments of the present disclosure, with which a vehicle can be controlled to perform automatic drive on a fixed route, so as to improve the driving experience.

An automatic driving method is provided as set forth in independent claim 1. The method includes: determining whether a target vehicle travels on a pre-defined commuting route, where the commuting route is a fixed route on which the target vehicle travels at least twice in a preset period of time; acquiring target travel information corresponding to the commuting route if the target vehicle travels on the pre-defined commuting route, where the target travel information includes a historical running trajectory of the target vehicle on the commuting route; and controlling the target vehicle to perform automatic drive on the commuting route based on the target travel information, wherein the controlling the target vehicle to perform automatic drive on the commuting route based on the target travel information comprises:determining one or more available lanes of the commuting route based on the historical running trajectory; and selecting one of the available lanes or selecting different ones of the available lanes successively, during the automatic drive of the target vehicle.

In an embodiment, the determining whether a target vehicle travels on a pre-defined commuting route includes: acquiring current position information of the target vehicle and a forward direction of the target vehicle; and determining whether the target vehicle travels on the pre-defined commuting route based on the current position information and the forward direction of the target vehicle.

The controlling the target vehicle to perform automatic drive on the commuting route based on the target travel information includes: determining one or more available lanes of the commuting route based on the historical running trajectory; and selecting one of the available lanes or selecting different ones of the available lanes successively, during a process that the target vehicle is controlled to perform automatic drive.

In an embodiment, the target travel information further includes at least one of: running state information of the target vehicle in the historical running trajectory; and information on a control behavior performed by the driver on the target vehicle in the historical running trajectory.

In an embodiment, the target travel information includes running state information of the target vehicle in the historical running trajectory, and the controlling the target vehicle to perform automatic drive on the commuting route based on the target travel information includes: generating trajectory information based on the running state information, where the trajectory information includes one or more of: curvature information of position points in the historical running trajectory, speed limit information of at least one position point in the historical running trajectory, and reference range information of steering wheel angles at the position points in the historical running trajectory; and controlling the target vehicle to perform automatic drive on the commuting route based on the target travel information and the trajectory information.

In an embodiment, the commuting route is defined by: recording vehicle position information of the target vehicle at recording time points during a process that the target vehicle travels from a target start point to a target end point, where the target start point is an origin set for the commuting route by a driver, and the target end point is a destination set for the commuting route by the driver; forming a running trajectory of the target vehicle with the recorded vehicle position information; and defining a road consistent with the running trajectory as the commuting route.

In an embodiment, the commuting route is defined by: recording vehicle position information of the target vehicle at recording time points during a running of the target vehicle; forming a running trajectory of the target vehicle with the recorded vehicle position information; determining whether the number of times that the target vehicle runs on a road consistent with the running trajectory exceeds a preset threshold within a preset period of time; and defining the road as the commuting route if the number of times that the target vehicle runs on the road consistent with the running trajectory exceeds the preset threshold within the preset period of time.

In an embodiment, the recording vehicle position information of the target vehicle at recording time points includes: recording geodetic coordinates of the target vehicle at the recording time points; or recording local coordinates of the target vehicle at the recording time points.

An automatic driving device is provided as set forth in independent claim 7 The device includes: a determining unit, configured to determine whether a target vehicle travels on a pre-defined commuting route, where the commuting route is a fixed route on which the target vehicle travels at least twice in a preset period of time ; an acquisition unit, configured to acquire target travel information corresponding to the commuting route if the target vehicle travels on the pre-defined commuting route, where the target travel information includes a historical running trajectory of the target vehicle on the commuting route; and a control unit, configured to control the target vehicle to perform automatic drive on the commuting route based on the target travel information, wherein the control unit comprises:a determination subunit, configured to determine one or more available lanes of the commuting route based on the historical running trajectory; and a selection subunit, configured to select one of the available lanes or select different ones of the available lanes successively, during the automatic drive of the target vehicle.

In an embodiment, the determining unit includes: an information acquisition subunit, configured to acquire current position information of the target vehicle; and a route determining subunit, configured to determine whether the target vehicle travels on the pre-defined commuting route based on the current position information and a forward direction of the target vehicle.

In an embodiment, the control unit includes: a determination subunit, configured to determine one or more available lanes of the commuting route based on the historical running trajectory; and a selection subunit, configured to select one of the available lanes or select different ones of the available lanes successively, during the automatic drive of the target vehicle.

In an embodiment, the target travel information further includes at least one of: running state information of the target vehicle in the historical running trajectory; and information on a control behavior performed by the driver on the target vehicle in the historical running trajectory.

In an embodiment, the target travel information comprises running state information of the target vehicle in the historical running trajectory, and the control unit includes: a generation subunit, configured to generate trajectory information based on the running state information, where the trajectory information includes one or more of: curvature information of position points in the historical running trajectory, speed limit information of at least one position point in the historical running trajectory, and reference range information of steering wheel angles at the position points in the historical running trajectory; and a control subunit, configured to control the target vehicle to perform automatic drive on the commuting route based on the target travel information and the trajectory information.

In an embodiment, the device further includes: a recording unit, configured to record vehicle position information of the target vehicle at recording time points during a process that the target vehicle travels from a target start point to a target end point, where the target start point is an origin set for the commuting route by a driver, and the target end point is a destination set for the commuting route by the driver; a forming unit, configured to form a running trajectory of the target vehicle with the recorded vehicle position information; and a defining unit, configured to define a road consistent with the running trajectory as the commuting route.

In an embodiment, the device further includes: a recording unit, configured to record vehicle position information of the target vehicle at recording time points during a running of the target vehicle; a forming unit, configured to form a running trajectory of the target vehicle with the recorded vehicle position information; a determining unit, configured to determine whether the number of times that the target vehicle runs on a road consistent with the running trajectory exceeds a preset threshold within a preset period of time; and a defining unit, configured to define the road as the commuting route if the number of times that the target vehicle runs on the road consistent with the running trajectory exceeds the preset threshold within the preset period of time.

In an embodiment, the recording unit is configured to record geodetic coordinates of the target vehicle at the recording time points; or record local coordinates of the target vehicle at the recording time points.

An automatic driving device is further provided according to an embodiment of the present disclosure. The device includes a processor, a memory and a system bus.

The processor and the memory are connected to each other via the system bus.

The memory is configured to store one or more programs including instructions. The instructions, when executed by the processor, cause the processer to perform the method according to any one of the above embodiments.

A computer readable storage medium is further provided as set forth in independent claim 13 The computer readable storage medium stores instructions. The instructions, when running on a terminal device, cause the terminal device to perform the method according to any one of the above embodiments.

A computer program product is further provided according to an embodiment of the present disclosure. The computer program product, when running on a terminal device, causes the terminal device to perform the method according to any one of the above embodiments.

In the automatic driving method and automatic driving device provided according to the embodiments of the present disclosure, it is determined whether a target vehicle travels on a pre-defined commuting route, where the commuting route is a fixed route on which the target vehicle travels at least twice in a preset period of time . Target travel information corresponding to the commuting route is acquired if the target vehicle travels on the pre-defined commuting route. The target travel information includes a historical running trajectory of the target vehicle on the commuting route. The target vehicle is controlled to perform automatic drive on the commuting route based on the target travel information, which comprises determining one or more available lanes of the commuting route based on the historical running trajectory; and selecting one of the available lanes or selecting different ones of the available lanes successively, during the automatic drive of the target vehicle. Therefore, with the embodiments of the present disclosure, the target vehicle, instead of being manually controlled by a driver to travel on the commuting route, can be controlled to perform automatic drive on the commuting route based on the acquired target travel information corresponding to the commuting route. Hence, repeated and tedious driving actions performed by the driver are reduced, thereby improving the driving experience of the driver.

### BRIEF DESCRIPTION OF THE DRAWINGS

The drawings to be used in the description of the embodiments or the conventional technology will be described briefly as follows, so that the technical solutions according to the embodiments of the present disclosure or according to the conventional technology will become clearer. It is apparent that the drawings in the following description only illustrate some embodiments of the present disclosure. For those skilled in the art, other drawings may be obtained according to these drawings without any creative work.
Figure 1 is a first flowchart of an automatic driving method according to an embodiment of the present disclosure;
Figure 2 is a second flowchart of an automatic driving method according to an embodiment of the present disclosure;
Figure 3 is a schematic diagram of a rear axle center of a vehicle according to an embodiment of the present disclosure;
Figure 4 is a third flowchart of an automatic driving method according to an embodiment of the present disclosure;
Figure 5 is a schematic diagram of available lanes on a commuting route according to an embodiment of the present disclosure;
Figure 6 is a schematic diagram of a running trajectory on a commuting route according to an embodiment of the present disclosure;
Figure 7 is a fourth flowchart of an automatic driving method according to an embodiment of the present disclosure;
Figure 8 is a schematic diagram showing a commuting route redefining process according to an embodiment of the present disclosure;
Figure 9A is a first block diagram of a structure of an automatic driving device according to an embodiment of the present disclosure;
Figure 9B is a second block diagram of a structure of an automatic driving device according to an embodiment of the present disclosure;
Figure 9C is a third block diagram of a structure of an automatic driving device according to an embodiment of the present disclosure; and
Figure 9D is a fourth block diagram of a structure of an automatic driving device according to an embodiment of the present disclosure.

### DETAILED DESCRIPTION OF EMBODIMENTS

An automatic driving method and an automatic driving device are provided according to the present disclosure. With the method and device, without using a high-precision map to assist the driver, a vehicle is controlled to perform automatic drive on a fixed route based on historical running trajectory of the driver on the fixed route. In this way, it is unnecessary for the driver to manually control the vehicle to travel on the fixed route, thereby reducing the repeated and tedious driving actions performed by the driver and improving the driving experience of the driver. The method is described in detail below.

In order to make the objectives, technical solutions and advantages of the embodiments of the present disclosure more clear, the technical solutions according to the embodiments of the present disclosure are described clearly and completely as follows in conjunction with the drawings. Apparently, the described embodiments are only a few rather than all of the embodiments according to the present disclosure. Any other embodiments obtained by those skilled in the art based on the embodiments in the present disclosure without any creative work fall in the scope of the present disclosure.

### First embodiment

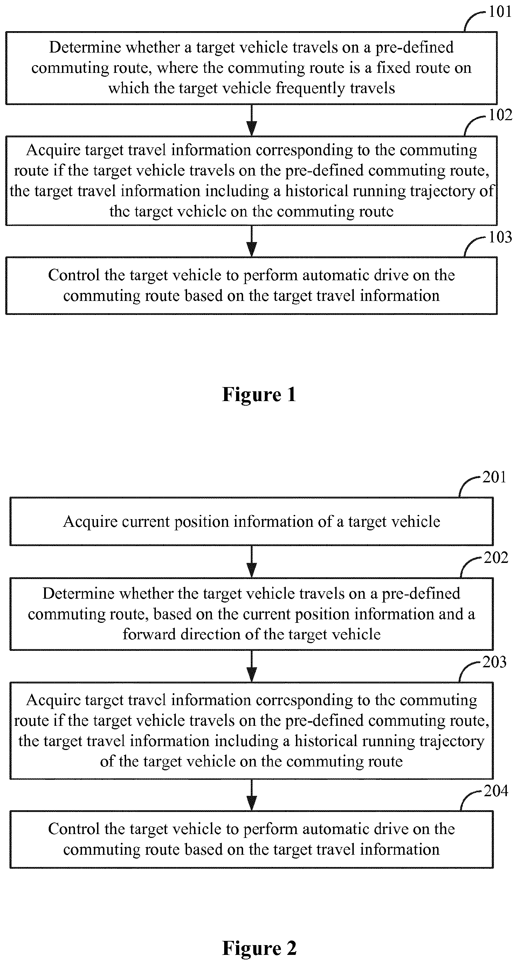

Reference is made to Figure 1, which shows a flowchart of an automatic driving method according to an embodiment of the present disclosure. As shown in Figure 1, the method includes steps 101 to 103.

In step 101, it is determined whether a target vehicle travels on a pre-defined commuting route, where the commuting route is a fixed route on which the target vehicle frequently travels.

In practices, any vehicle which adopts the automatic driving method according to the embodiment is defined as a target vehicle. It may be determined whether the target vehicle travels on the pre-defined commuting route.

The commuting route indicates a fixed route on which the target vehicle frequently travels. For example, the commuting route may be a fixed road on which an enterprise driver drives the scheduled bus to transfer the employees to and from the work, a road on which an employee drives the vehicle to and from the work, or the like. The frequent travel indicates that the target vehicle travels on a same route at least twice in a preset period of time. For example, if the target vehicle travels on a same route at least twice in a week, this route is a frequent-travel route for the target vehicle. It should be noted that, although the roads to and from the work are the same, the road to the work and the road from the work form two different commuting routes since the vehicle travels in different directions on the roads.

The pre-defined commuting route is a commuting route which is defined in advance. Information on the commuting route may be stored in a local database of the target vehicle or stored in a cloud database at a server side capable of communicating with the target vehicle. In this case, when an automatic driving function of the target vehicle is activated, it can be determined whether the target vehicle travels on the commuting route based on information in the local database or the cloud database. Then, step 102 is performed.

In step 102, target travel information corresponding to the commuting route is acquired if the target vehicle travels on the pre-defined commuting route. The target travel information includes a historical running trajectory of the target vehicle on the commuting route.

In practices, if it is determined in step 101 that the target vehicle travels on the pre-defined commuting route, target travel information corresponding to the commuting route may be further acquired. The target travel information includes a historical running trajectory of the target vehicle on the commuting route.

The historical running trajectory is a trajectory of a historical travel of the target vehicle on the commuting route, and is stored in the above local database or cloud database. Since two different commuting routes may be formed due to different travel directions in a same road, the target vehicle has different travel trajectories on the different commuting routes and the travel trajectories correspond to different target travel information.

In step 103, the target vehicle is controlled to perform automatic drive on the commuting route based on the target travel information.

It should be noted that, the automatic driving function of the target vehicle can be activated at any time before step 103 is performed.

In an implementation, after the target travel information corresponding to the commuting route is acquired in step 102, that is, after the historical running trajectory of the target vehicle on the commuting route is acquired, the target vehicle can be controlled to perform automatic drive on the commuting route based on the historical running trajectory of the target vehicle on the commuting route if the automatic travel function of the target vehicle is activated.

It can be understood that, the historical running trajectory of the target vehicle on the commuting route may be stored in a local database or a cloud database for the target vehicle in order of acquisition time. Therefore, in the automatic drive, the recent historical running trajectory of the target vehicle on the commuting route can be acquired, based on which the target vehicle can be controlled to perform automatic drive on the commuting route. For example, if the driver manually performed an urgent brake every time when the target vehicle passed a certain segment of the commuting route in automatic drive in recent three days, the speed of the vehicle may be pre-reduced when the target vehicle is controlled to perform automatic drive on this segment of the commuting route. For example, the speed of the target vehicle is reduced from 60km/h to 50km/h, and then is gradually reduced to 40km/h, 30km/h and the like before the target vehicle arrives at the segment of the commuting route. The driving experience of the driver can be improved by pre-reducing the speed.

In summary, in the automatic driving method according to the embodiment of the present disclosure, it is determined whether a target vehicle travels on a pre-defined commuting route, where the commuting route is a fixed route on which the target vehicle travels at least twice in a preset period of time. Target travel information corresponding to the commuting route is acquired if the target vehicle travels on the pre-defined commuting route. The target travel information includes a historical running trajectory of the target vehicle on the commuting route. The target vehicle is controlled to perform automatic drive on the commuting route based on the target travel information, which comprises determining one or more available lanes of the commuting route based on the historical running trajectory; and selecting one of the available lanes or selecting different ones of the available lanes successively, during the automatic drive of the target vehicle. Therefore, with the embodiment of the present disclosure, the target vehicle, instead of being manually controlled by a driver to travel on the commuting route, can be controlled to perform automatic drive on the commuting route based on the acquired target travel information corresponding to the commuting route. Hence, repeated and tedious driving actions performed by the driver are reduced, thereby improving the driving experience of the driver.

In addition, only the target travel information corresponding to the commuting route, instead of the high-precision map with a large amount of data, needs to be stored in the local database of the target vehicle. In this case, the cost is reduced and the navigation accuracy is improved, while an actual requirement of driving on the commuting route is met.

### Second embodiment

It should be noted that, an implementation of step 101 of determining whether a target vehicle travels on a pre-defined commuting route" is described with the following steps 201 to 202 in the embodiment.

Reference is made to Figure 2, which is a flowchart of an automatic driving method according to the embodiment. The automatic driving method includes steps 201 to 204.

In step 201, current position information of the target vehicle is acquired.

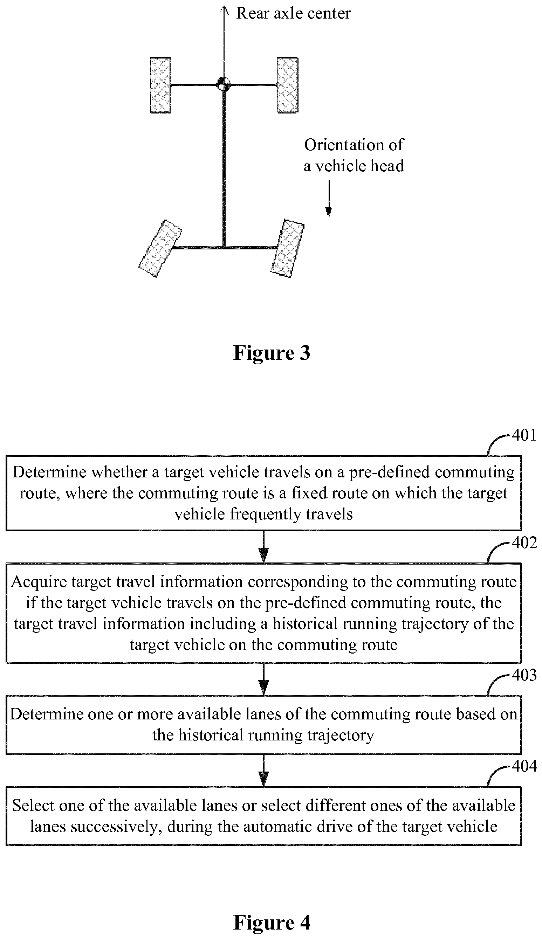

During the traveling of the target vehicle, a current position of the target vehicle can be acquired by using a positioning system. Changing coordinates of a rear axle center (as shown in Figure 3) of the target vehicle may be acquired, or changing coordinates of other portions of the target vehicle may be acquired.

In an implementation of the embodiment, a geodetic coordinate of the target vehicle may be recorded as the position of the target vehicle. In the implementation, a satellite positioning system may be installed at a certain portion a of the target vehicle, and current longitude and latitude coordinates of the portion a is acquired with the satellite positioning system. Then, the longitude and latitude coordinates (i.e., geodetic coordinates) of the rear axle center of the target vehicle is calculated based on a relative position relationship between the portion a and the rear axle center of the vehicle, and the calculated longitude and latitude coordinates are taken as the current position information of the target vehicle.

In another implementation of the embodiment, local coordinates of the target vehicle may be recorded as the position of the target vehicle. In the implementation, a laser radar or a camera may be installed at a certain portion b of the target vehicle, and current local position coordinates of the portion b is acquired with a local positioning system based on the laser radar or the camera. Then, local coordinates of the rear axle center of the target vehicle is calculated based on a relative position relationship between the portion b and the rear axle center of the vehicle, and the calculated local coordinates are taken as the current position information of the target vehicle.

As can be seen, the current position information of the target vehicle can be acquired by the positioning system during the traveling of the vehicle. Then, step 202 may be performed.

In step 202, it is determined whether the target vehicle travels on the pre-defined commuting route based on the current position information and a forward direction of the target vehicle.

In practices, after the current position information of the target vehicle is acquired in step 201, whether the target vehicle travels on the pre-defined commuting router may be determined based on the current position information and the forward direction of the target vehicle.

Since a same road corresponds to two different commuting routes having different vehicle travel directions, and different commuting routes correspond to different defining results, the forward direction of the target vehicle is also required to determine whether the target vehicle travels on the pre-defined commuting route after the current position information of the target vehicle is acquired.

In step 203, if the target vehicle travels on the pre-defined commuting route, target travel information corresponding to the commuting route is acquired. The target travel information includes a historical running trajectory of the target vehicle on the commuting route.

In step 204, the target vehicle is controlled to perform automatic drive on the commuting route based on the target travel information.

It should be noted that, steps 203 to 204 are the same as steps 102 to 103 in the first embodiment. One may refer to the descriptions in the first embodiment for the related part, which is not repeated here.

In summary, in the automatic driving method according to the embodiment of the present disclosure, the current position information of the target vehicle may be acquired, and it is determined whether the target vehicle travels on the pre-defined commuting route based on the current position information and the forward direction of the target vehicle. The commuting route is a fixed route on which the target vehicle frequently travels. The target travel information corresponding to the commuting route is acquired if the target vehicle travels on the pre-defined commuting route. The target travel information includes a historical running trajectory of the target vehicle on the commuting route. The target vehicle is controlled to perform automatic drive on the commuting route based on the target travel information. Therefore, with the embodiment of the present disclosure, whether the target vehicle travels on the commuting route can be determined by acquiring the current position information and the forward direction of the target vehicle. In this way, the target vehicle can be controlled to perform automatic drive on the commuting route by using the target travel information corresponding to the commuting route. Hence, it is unnecessary for the driver to manually control the vehicle to travel on the commuting route, thereby reducing the repeated and tedious driving actions performed by the driver and improving the driving experience of the driver.

### Third embodiment

It should be noted that, an implementation of step 103 in the first embodiment is described with the following steps 403 to 404 in the embodiment.

Reference is made to Figure 4, which is a flowchart of an automatic driving method according to the embodiment. The automatic driving method includes steps 401 to 404.

In step 401, it is determined whether a target vehicle travels on a pre-defined commuting route. The commuting route is a fixed route on which the target vehicle frequently travels.

In step 402, target travel information corresponding to the commuting route is acquired if the target vehicle travels on the pre-defined commuting route. The target travel information includes a historical running trajectory of the target vehicle on the commuting route.

It should be noted that, steps 401 to 402 are the same as steps 101 to 102 in the first embodiment, and one may refer to the description of the first embodiment for the related part, which is not repeated here. Apparently, step 401 may be replaced by steps 201 to 202 in the second embodiment or other implementations. One may refer to the description of the second embodiment for the related part, which is not repeated here.

In step 403, one or more available lanes of the commuting route are determined based on the historical running trajectory.

In an actual application, after the target travel information corresponding to the commuting route, that is, the historical running trajectory of the target vehicle on the commuting route, is acquired in step 402, one or more available lanes of the commuting route may be determined based on the historical running trajectory, and then step 404 can be performed.

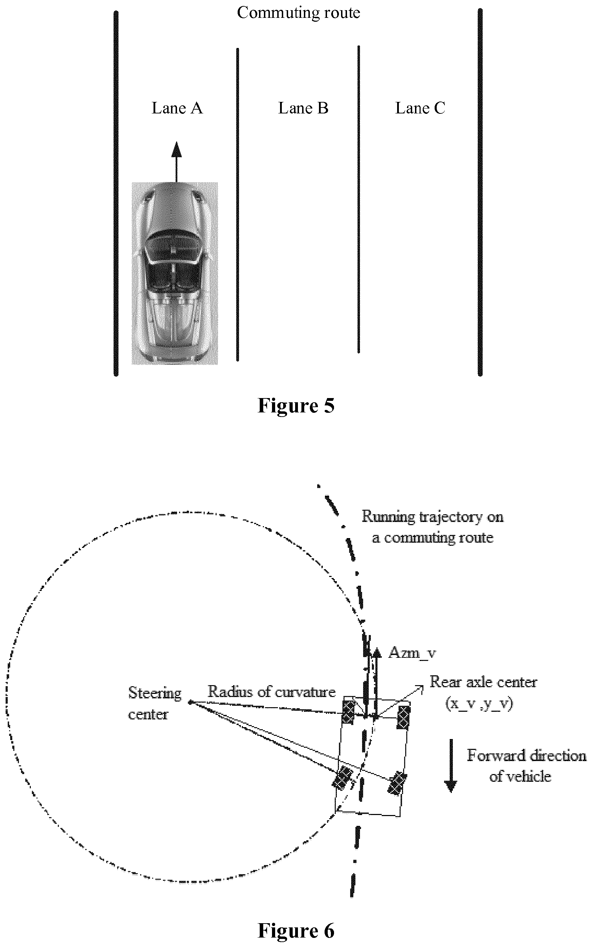

For example, as shown in Figure 5 which is a schematic diagram of available lanes of a commuting route, there are totally three lanes in the commuting route, namely a lane A, a lane B and a lane C from left to right. If the historical running trajectory of the target vehicle on the commuting route acquired in step 402 includes that the target vehicle travelled on the lane A of the commuting route before, then the lane A of the commuting route may be determined as an available lane.

In step 404, one of the available lanes may be selected or different ones of the available lanes may be selected successively during the automatic drive of the target vehicle.

In practices, after the available lanes of the commuting route are determined in step 403, one of the available lanes may be selected, or different ones of the available lanes of the commuting route are selected successively, during the automatic drive of the target vehicle.

For example, based on the above example, still referring to Figure 5, if the historical running trajectory of the target vehicle on the commuting route acquired in step 402 includes that, the target vehicle traveled on not only the lane A but also the lane B and lane C of the commuting route before, then all of the lanes A, B and C of the commuting route are determined as available lanes. Therefore, in the process of controlling the target vehicle to perform automatic drive, any one of the lanes A, B and C may be selected as an available lane for the automatic drive, or, different ones of the lanes A, B and C of the commuting route may be selected successively for the automatic drive. For example, the lane A may be first selected for the automatic drive, and the target vehicle may change to another lane after a period of time or when there is a vehicle in front of the target vehicle in the lane A. For example, the lane B is then selected for the automatic drive, or the target vehicle changes from the lane B to the lane C for the automatic drive.

In summary, in the automatic driving method according to the embodiment of the present disclosure, it is determined whether a target vehicle travels on a pre-defined commuting route, where the commuting route is a fixed route on which the target vehicle travels at least twice in a preset period of time. Target travel information corresponding to the commuting route is acquired if the target vehicle travels on the pre-defined commuting route. The target travel information includes a historical running trajectory of the target vehicle on the commuting route. One or more available lanes of the commuting route are determined based on the historical running trajectory. One of the available lanes is selected or different ones of the available lanes are selected successively, during the automatic drive of the target vehicle. Therefore, with the embodiment of the present disclosure, the target vehicle can be controlled to perform automatic drive by automatically selecting one lane of the commuting route or changing between the available lanes of the commuting route.

### Fourth embodiment

It should be noted that, in the embodiment, in addition to the historical running trajectory of the target vehicle on the commuting route, the above target travel information corresponding to the commuting route may further include at least one of: running state information of the target vehicle in the historical running trajectory, and information on a control behavior performed by the driver on the target vehicle in the historical running trajectory.

The running state information of the target vehicle in the historical running trajectory may be state information of the target vehicle at position points of the historical running trajectory, such as information of longitude x_v, latitude y_v, speed, steering wheel angle and heading Azm v at each position point, as shown in Figure 6. The information on a control behavior performed by the driver on the target vehicle in the historical running trajectory may be information of controls on the speed, the steering wheel angle, and the like performed by the driver when the target vehicle travels in the historical running trajectory.

In addition, the above running state information and control behavior information may be used to construct a vehicle dynamical model, which may be used to control the automatic drive of the target vehicle each time.

Based on the above, an implementation of step 103 in the first embodiment is described with the following steps 703 to 704 in the embodiment.

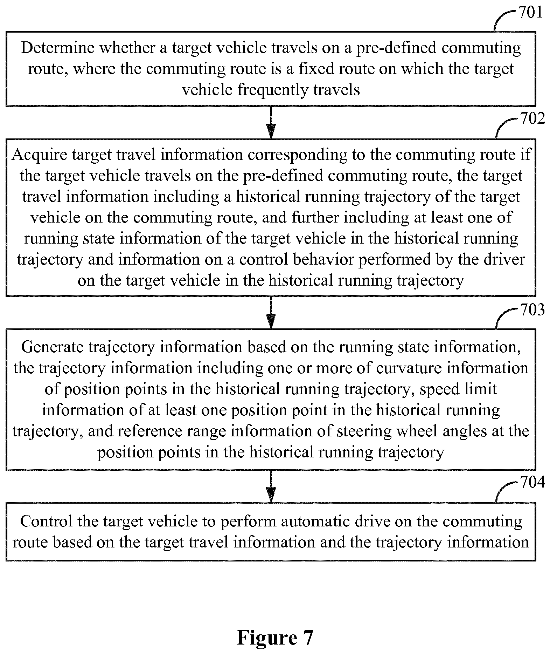

Reference is made to Figure 7, which is a flowchart of an automatic driving method according to the embodiment. The automatic driving method includes steps 701 to 704.

In step 701, it is determined whether a target vehicle travels on a pre-defined commuting route, where the commuting route is a fixed route on which the target vehicle frequently travels.

It should be noted that, step 701 is the same as step 101 in the first embodiment. One may refer to the descriptions in the first embodiment for the related part, which is not repeated here. Apparently, step 701 may be replaced by steps 201 to 202 in the second embodiment or other implementations. One may refer to the descriptions in the second embodiment for the related part, which is not repeated here.

In step 702, target travel information corresponding to the commuting route is acquired if the target vehicle travels on the pre-defined commuting route.

The target travel information includes a historical running trajectory of the target vehicle on the commuting route, and at least one of running state information of the target vehicle in the historical running trajectory and information on a control behavior performed by the driver on the target vehicle in the historical running trajectory.

It should be noted that, the method for acquiring the target travel information corresponding to the commuting route in step 702 is the same as that in step 102 in the first embodiment. One may refer to the descriptions in the first embodiment for the related part, which is not repeated here. The method for acquiring the at least one of the running state information of the target vehicle in the historical running trajectory and the information on a control behavior performed by the driver on the target vehicle in the historical running trajectory in step 702 is the same as that in step 201 in the second embodiment. One may refer to the descriptions in the second embodiment for the related part, which is not repeated here. Alternatively, the at least one of the running state information of the target vehicle in the historical running trajectory and the information on a control behavior performed by the driver on the target vehicle in the historical running trajectory may be obtained from the vehicle dynamical model.

In step 703, trajectory information is generated based on the running state information.

In the embodiment, the target travel information corresponding to the commuting route may be acquired in step 702. The target travel information includes the running state information of the target vehicle in the historical running trajectory. Hence, trajectory information can be generated based on the running state information. The trajectory information includes one or more of: curvature information of position points in the historical running trajectory (i.e., a curvature of a certain position point in the historical running trajectory), speed limit information of at least one position point in the historical running trajectory, and reference range information of steering wheel angles at the position points in the historical running trajectory.

The speed limit information of at least one position point in the historical running trajectory indicates that the speed of the target vehicle is limited in at least one position point on the commuting route. For example, in a previous driving, if the driver performed braking for multiple times in a certain travel section, a speed limit value may be set for the travel section based on a speed-reducing extent of the target vehicle. For example, the speed is limited to 60km/h. The reference range information of the steering wheel angles at the position points in the historical running trajectory indicates reference ranges of the steering wheel angles at the position points for the current automatic drive calculated based on the historical running trajectory generated when the target vehicle ran on the commuting route in the past.

In step 704, the target vehicle is controlled to perform automatic drive on the commuting route based on the target travel information and the trajectory information.

In the embodiment, after the trajectory information is acquired in step 703, the target vehicle may be controlled to perform automatic drive on the commuting route based on the target travel information and the trajectory information.

For example, in the current automatic driving, if it is determined that the driver performed an urgent brake for multiple times when the target vehicle passed a certain position with a speed limit of 40km/h on the commuting route, based on the trajectory information, the speed of the vehicle may be pre-reduced when the target vehicle controlled to perform automatic drive is close to this speed limit position of the commuting route. That is, the speed of the vehicle is gradually reduced when the vehicle is in a certain distance from this speed limit position. For example, the speed of the target vehicle is first reduced from 70km/h to 60km/h, then reduced to 50km/h, and is reduced to 40km/h or less when the vehicle arrives at the speed limit position. The driving experience of the driver can be improved by gradually pre-reducing the speed.

For another example, in the current automatic driving, under the condition that the reference range information of the steering wheel angle corresponding to the current position point is determined based on the trajectory information, if a steering wheel angle actually decided at a current position point is not in the reference range, it indicates that the decision is incorrect and the steering wheel angle should be modified to be in the reference range.

In summary, in the automatic driving method according to the embodiment of the present disclosure, it is determined whether a target vehicle travels on a pre-defined commuting route, where the commuting route is a fixed route on which the target vehicle frequently travels. Target travel information corresponding to the commuting route is acquired if the target vehicle travels on the pre-defined commuting route. The target travel information includes a historical running trajectory of the target vehicle on the commuting route, and further includes at least one of running state information of the target vehicle in the historical running trajectory and information on a control behavior performed by the driver on the target vehicle in the historical running trajectory. Trajectory information is generated based on the running state information. The trajectory information includes one or more of: curvature information of position points in the historical running trajectory, speed limit information of at least one position point in the historical running trajectory, and reference range information of steering wheel angles at the position points in the historical running trajectory. Then, the target vehicle is controlled to perform automatic drive on the commuting route based on the target travel information and the trajectory information. Therefore, with the embodiment of the present disclosure, the target vehicle can be controlled to perform automatic drive on the commuting route based on the acquired target travel information corresponding to the commuting route and the trajectory information. In this case, it is unnecessary for the driver to manually control the vehicle to travel on the commuting route, thereby reducing the repeated and tedious driving actions performed by the driver and improving the driving experience of the driver.

### Fifth embodiment

In the above embodiments, the commuting route may be defined with a defining method according to the embodiment, which includes the following two implementations.

In a first optional implementation, the commuting route may be defined by steps A to C.

In step A, vehicle position information of the target vehicle is recorded at recording time points during a process that the target vehicle travels from a target start point to a target end point. The target start point is an origin set for the commuting route by a driver, and the target end point is a destination set for the commuting route by the driver.

In step B, a running trajectory of the target vehicle is formed with the recorded vehicle position information.

In step C, a road consistent with the running trajectory is defined as the commuting route.

In the implementation, if the driver wants to define a commuting route, he may manually set an origin position and a destination position of the commuting route. Here, the origin position is defined as the target start point and the destination position is defined as the target end point. In the setting process, the origin position may be set as the target start point when the target vehicle is located at the origin position, and the destination position is set as the target end point after being searched in a map or after the target vehicle arrives the destination position. Therefore, the commuting route may be recorded when the target vehicle travels on the commuting route for the first time. In order to record the commuting route, the automatic driving function of the target vehicle may be inactivated, and the target vehicle is manually driven by the driver to travel on the commuting route. In this process, the target vehicle is controlled to record the commuting route in a teaching and programming manner. Meanwhile, vehicle position information of the target vehicle at recording time points is recorded, to form a running trajectory of the target vehicle between the target start point and the target end point. Then, a road consistent with the running trajectory may be defined as a commuting route. In this way, the process of defining the commuting route is completed.

In an optional implementation, the recording the vehicle position information of the target vehicle at the recording time points in step A includes: recording geodetic coordinates of the target vehicle at the recording time points, or recording local coordinates of the target vehicle at the recording time points.

In a process that the target vehicle travels from the target start point to the target end portion, a position of the target vehicle may be continuously acquired by using a positioning system at a preset time interval (such as 0.5 seconds). The changing coordinates of a rear axle center (as shown in Figure 3) of the target vehicle may be acquired, the or changing coordinates of other portions of the target vehicle may be acquired.

In an implementation of the embodiment, the position of the target vehicle may be recorded as geodetic coordinates of the target vehicle. In the implementation, a satellite positioning system may be installed at a certain portion a of the target vehicle, and the longitude and latitude coordinates of the portion a are acquired with the satellite positioning system. Then, the longitude and latitude coordinates (i.e., geodetic coordinates) of the rear axle center of the target vehicle is calculated based on a relative position relationship between the portion a and the rear axle center of the vehicle, and the calculated longitude and latitude coordinates are taken as the position of the target vehicle.

In another implementation of the embodiment, the position of the target vehicle may be recorded as a local coordinate of the target vehicle. In the implementation, a laser radar or a camera may be installed at a certain portion b of the target vehicle, and a local position coordinate of the portion b is acquired with a local positioning system based on the laser radar or the camera. Then, a local coordinate of the rear axle center of the target vehicle is calculated based on a relative position relationship between the portion b and the rear axle center of the vehicle, and the calculated local coordinate is taken as the position information of the target vehicle.

As can be seen, in a process that the target vehicle travels from the target start point to the target end point, the position of the target vehicle, that is, a position coordinate of the target vehicle at a certain time point, is acquired with the positioning system. In this case, a series of coordinate points from the target start point to the target end point may be recorded as the vehicle moves. The time may be divided into several time segments, and a smoothing process may be performed on coordinate points in each of the time segments to form a running trajectory of the target vehicle, and then a road consistent with the running trajectory is defined as a commuting route.

In a second optional implementation, the commuting route may be defined by steps D to G.

In step D, vehicle position information of the target vehicle is recorded at recording time points during a running of the target vehicle.

In step E, a running trajectory of the target vehicle is formed with the recorded vehicle position information.

In step F, it is determined whether the number of times that the target vehicle runs on a road consistent with the running trajectory exceeds a preset threshold within a preset period of time.

In step G, the road is defined as the commuting route if the number of times that the target vehicle runs on the road consistent with the running trajectory within the preset period of time exceeds the preset threshold.

In the implementation, in a running process of the target vehicle (may be a manual driving process without using the automatic driving function, or an automatic driving process under the navigation of a high-precision map), the vehicle position information of the target vehicle at the respective recording time points are recorded. In an optional implementation, the recorded vehicle position information of the target vehicle at the recording time points may be geodetic coordinates of the target vehicle at the recording time points, or local coordinates of the target vehicle at the recording time points. A process of recording the vehicle position information of the target vehicle at the recording time points is the same as that in the first implementation. One may refer to the descriptions in the first implementation for the related part, which is not repeated here.

By the step E, the running trajectory of the target vehicle can be formed by using the vehicle position information of the target vehicle recorded at the recording time points. A process of forming the running trajectory is similar to that in the first implementation. One may refer to the descriptions in the first implementation for the related part, which is not repeated here.

Then, a road consistent with the running trajectory may be determined based on the running trajectory acquired in step E. Moreover, it may be determined whether the number of times that the target vehicle travels on the road exceeds a preset threshold within a preset period of time. The preset period of time and the preset threshold are both set in advance for determining whether a road is a commuting route. For example, the preset period of time may be set as ten days and the preset threshold is set as ten times. In this case, it is determined whether the number of times that the target vehicle travels on the road exceeds ten times within ten days. The road is defined as a commuting route if the number of times that the target vehicle travels on the road exceeds ten times within ten days, and otherwise the road is not defined as a commuting route.

It should be noted that, the above preset period of time and the preset threshold may be set as needed, which is not limited herein.

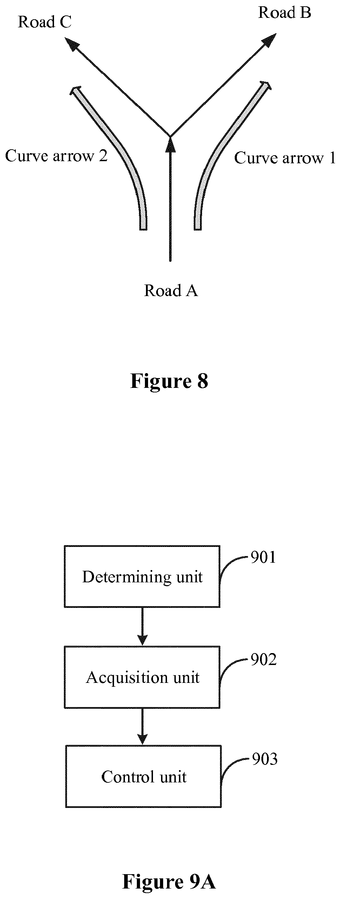

It should be also noted that, in practices, the commuting route may be re-defined based on a recent running trajectory of the vehicle. Reference is made to Figure 8, which shows a schematic diagram of a commuting route re-defining according to an embodiment of the present disclosure. As shown in Figure 8, if a road A and a road B are defined as a commuting route, that is, the historical running trajectory of the target vehicle is along a direction indicated by a curve arrow 1 in Figure 8, from the road A to the road B. However, in recent days, for example, in recent 10 days, the running trajectory of the target vehicle is changed to a direction indicated by a curve arrow 2 in Figure 8, i.e., from the road A to the road C. In this case, the commuting route may be re-defined based on the change in the running trajectory of the target vehicle, that is, the commuting route originally defined as the road A and the road B is changed to the road A to the road C, thereby improving the accuracy in defining the commuting route.

Therefore, two optional method for defining the commuting rout are provided according to the embodiment, so as to determine whether the target vehicle travels on the pre-defined commuting route in the case that the automatic driving function of the target vehicle is activated, thereby achieving a subsequent automatic driving.

### Sixth embodiment

Reference is made to Figure 9A, which is a block diagram of an automatic driving device according to the embodiment. The automatic driving device includes a determining unit 901, an acquisition unit 902 and a control unit 903.

The determining unit 901 is configured to determine whether a target vehicle travels on a pre-defined commuting route, where the commuting route is a fixed route on which the target vehicle frequently travels.

The acquisition unit 902 is configured to acquire target travel information corresponding to the commuting route if the target vehicle travels on the pre-defined commuting route. The target travel information includes a historical running trajectory of the target vehicle on the commuting route.

The control unit 903 is configured to control the target vehicle to perform automatic drive on the commuting route based on the target travel information.

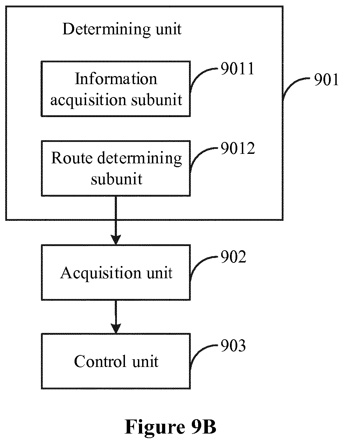

In an implementation of the embodiment, as shown in Figure 9B, the determining unit 901 may include an information acquisition subunit 9011 and a route determining subunit 9012.

The information acquisition subunit 9011 is configured to acquire current position information of the target vehicle.

The route determining subunit 9012 is configured to determine whether the target vehicle travels on the pre-defined commuting route based on the current position information and a forward direction of the target vehicle.

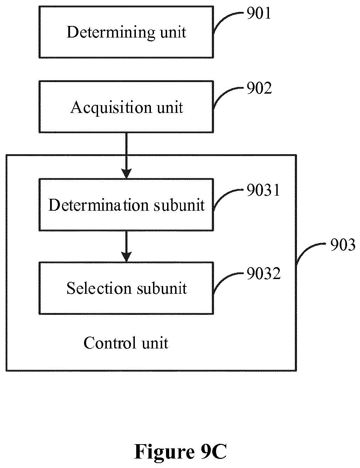

In an implementation of the embodiment, as shown in Figure 9C, the control unit 903 may include a determination subunit 9031 and a selection subunit 9032.

The determination subunit 9031 is configured to determine one or more available lanes of the commuting route based on the historical running trajectory.

The selection subunit 9032 is configured to select one of the available lanes or select different ones of the available lanes successively, during the automatic drive of the target vehicle.

In an implementation of the embodiment, the target travel information further includes at least one of: running state information of the target vehicle in the historical running trajectory; and information on a control behavior performed by the driver on the target vehicle in the historical running trajectory.

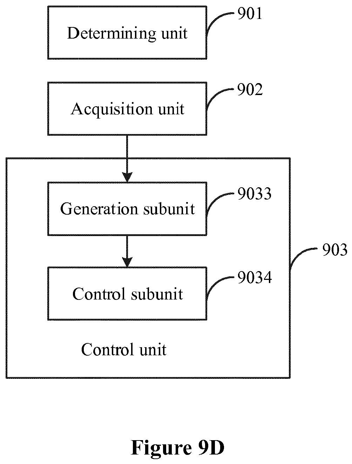

In an implementation of the embodiment, as shown in Figure 9D, the control unit 903 may include a generation subunit 9033 and a control subunit 9034.

The generation subunit 9033 is configured to generate trajectory information based on the running state information, where the trajectory information includes one or more of: curvature information of position points in the historical running trajectory, speed limit information of at least one position point in the historical running trajectory, and reference range information of steering wheel angles at the position points in the historical running trajectory.

The control subunit 9034 is configured to control the target vehicle to perform automatic drive on the commuting route based on the target travel information and the trajectory information.

In an implementation of the embodiment, the device further includes a recording unit, a forming unit and a defining unit.

The recording unit is configured to record vehicle position information of the target vehicle at recording time points during a process that the target vehicle travels from a target start point to a target end point, where the target start point is an origin set for the commuting route by a driver, and the target end point is a destination set for the commuting route by the driver.

The forming unit is configured to form a running trajectory of the target vehicle with the recorded vehicle position information.

The defining unit is configured to define a road consistent with the running trajectory as the commuting route.

In an implementation of the embodiment, the device further includes a recording unit, a forming unit, a determining unit and a defining unit.

The recording unit is configured to record vehicle position information of the target vehicle at the recording time points during a running of the target vehicle.

The forming unit is configured to form a running trajectory of the target vehicle with the recorded vehicle position information.

The determining unit is configured to determine whether the number of times that the target vehicle runs on a road consistent with the running trajectory exceeds a preset threshold within a preset period of time.

The defining unit is configured to define the road as the commuting route if the number of times that the target vehicle runs on the road consistent with the running trajectory within the preset period of time exceeds the preset threshold.

In an implementation of the embodiment, the recording unit is configured to record geodetic coordinates of the target vehicle at the recording time points; or record local coordinates of the target vehicle at the recording time points.

Further, an automatic driving device is provided according to an embodiment of the present disclosure. The automatic driving device includes a processor, a memory and a system bus.

The processor and the memory are connected to each other via the system bus.

The memory is configured to store one or more programs including instructions. The instructions, when executed by the processor, cause the processer to perform the above automatic driving method according to any one of the above embodiments.

Further, a computer readable storage medium is further provided according to an embodiment of the present disclosure. The computer readable storage medium stores instructions. The instructions, when running on a terminal device, cause the terminal device to perform the above automatic driving method according to any one of the above embodiments.

Further, a computer program product is further provided according to an embodiment of the present disclosure. The computer program product, when running on a terminal device, causes the terminal device to perform the above automatic driving method according to any one of the above embodiments.

As can be seen from the above embodiments, it can be clearly appreciated by those skilled in the art that, all or a part of steps in the methods according to the above embodiments may be implemented by means of software and necessary general hardware platform. Base on such understanding, the essential part of the technical solution of the present disclosure or the part of the technical solution of the present disclosure contributed to the conventional technology may be embodied as a software product. The computer software product is stored in a storage medium, such as an ROM/RAM, a magnetic disk and an optical disk, which includes several instructions to make a computer device (may be a personal computer, a server, a network communication device such as a media gateway, or the like) execute the methods according to the embodiments or some parts of the embodiments of the present disclosure.

It should be noted that, the embodiments in this specification are described in a progressive way, each of which emphasizes the differences from others, and for the same or similar parts, the embodiments can be referred to each other. Since the device embodiments correspond to the method embodiments, the description thereof is relatively simple, and for relevant matters references may be made to the description of the method.

It should be further noted that the relationship terminologies such as "first", "second" and the like are only used herein to distinguish one entity or operation from another, rather than to necessitate or imply that the actual relationship or order exists between the entities or operations. Furthermore, terms of "include", "comprise" or any other variants are intended to be non-exclusive. Therefore, a process, method, article or device including multiple elements includes not only the elements but also other elements that are not enumerated, or also include the elements inherent to the process, method, article or device. Unless expressively limited otherwise, the statement "comprising (including) a..." does not exclude the case that other similar elements may exist in the process, method, article or device.

## Claims

1. An automatic driving method, comprising:
determining (101, 401) whether a target vehicle travels on a pre-defined commuting route, wherein the commuting route is a fixed route on which the target vehicle travels at least twice in a preset period of time;
acquiring (102, 203, 402) target travel information corresponding to the commuting route if the target vehicle travels on the pre-defined commuting route, wherein the target travel information comprises a historical running trajectory of the target vehicle on the commuting route; and
controlling (103, 204) the target vehicle to perform automatic drive on the commuting route based on the target travel information,
wherein the controlling the target vehicle to perform automatic drive on the commuting route based on the target travel information comprises:
determining (403) one or more available lanes of the commuting route based on the historical running trajectory; and
selecting (404) one of the available lanes or selecting different ones of the available lanes successively, during the automatic drive of the target vehicle.

2. The automatic driving method according to claim 1, wherein the determining whether a target vehicle travels on a pre-defined commuting route comprises:
acquiring (201) current position information of the target vehicle and a forward direction of the target vehicle; and
determining (202) whether the target vehicle travels on the pre-defined commuting route based on the current position information and the forward direction of the target vehicle.

3. The automatic driving method according to claim 1 or 2, wherein the target travel information further comprises at least one of:
running state information of the target vehicle in the historical running trajectory; and
information on a control behavior performed by the driver on the target vehicle in the historical running trajectory.

4. The automatic driving method according to claim 1, wherein the target travel information comprises running state information of the target vehicle in the historical running trajectory, and the controlling the target vehicle to perform automatic drive on the commuting route based on the target travel information comprises:
generating (703) trajectory information based on the running state information, wherein the trajectory information comprises one or more of: curvature information of position points in the historical running trajectory, speed limit information of at least one position point in the historical running trajectory, and reference range information of steering wheel angles at the position points in the historical running trajectory; and
controlling (704) the target vehicle to perform automatic drive on the commuting route based on the target travel information and the trajectory information.

5. The automatic driving method according to claim 1, wherein the commuting route is defined by:
recording vehicle position information of the target vehicle at recording time points during a process that the target vehicle travels from a target start point to a target end point, wherein the target start point is an origin set for the commuting route by a driver, and the target end point is a destination set for the commuting route by the driver;
forming a running trajectory of the target vehicle with the recorded vehicle position information; and
defining a road consistent with the running trajectory as the commuting route.

6. The automatic driving method according to claim 1, wherein the commuting route is defined by:
recording vehicle position information of the target vehicle at recording time points during a running of the target vehicle;
forming a running trajectory of the target vehicle with the recorded vehicle position information;
determining whether the number of times that the target vehicle runs on a road consistent with the running trajectory exceeds a preset threshold within a preset period of time; and
defining the road as the commuting route if the number of times that the target vehicle runs on the road consistent with the running trajectory exceeds the preset threshold within the preset period of time.

7. An automatic driving device, comprising:
a determining unit (901), configured to determine whether a target vehicle travels on a pre-defined commuting route, wherein the commuting route is a fixed route on which the target vehicle travels at least twice in a preset period of time;
an acquisition unit (902), configured to acquire target travel information corresponding to the commuting route if the target vehicle travels on the pre-defined commuting route, wherein the target travel information comprises a historical running trajectory of the target vehicle on the commuting route; and
a control unit (903), configured to control the target vehicle to perform automatic drive on the commuting route based on the target travel information,
wherein the control unit comprises:
a determination subunit (9031), configured to determine one or more available lanes of the commuting route based on the historical running trajectory; and
a selection subunit (9032), configured to select one of the available lanes or select different ones of the available lanes successively, during the automatic drive of the target vehicle.

8. The automatic driving device according to claim 7, wherein the determining unit (901) comprises:
an information acquisition subunit (9011), configured to acquire current position information of the target vehicle and a forward direction of the target vehicle; and
a route determining subunit (9012), configured to determine whether the target vehicle travels on the pre-defined commuting route based on the current position information and the forward direction of the target vehicle.

9. The automatic driving device according to claim 7 or 8, wherein the target travel information further comprises at least one of:
running state information of the target vehicle in the historical running trajectory; and
information on a control behavior performed by the driver on the target vehicle in the historical running trajectory.

10. The automatic driving device according to claim 7, wherein the target travel information comprises running state information of the target vehicle in the historical running trajectory, and the control unit comprises:
a generation subunit (9033), configured to generate trajectory information based on the running state information, wherein the trajectory information comprises one or more of: curvature information of position points in the historical running trajectory, speed limit information of at least one position point in the historical running trajectory, and reference range information of steering wheel angles at the position points in the historical running trajectory; and
a control subunit (9034), configured to control the target vehicle to perform automatic drive on the commuting route based on the target travel information and the trajectory information.

11. The automatic driving device according to claim 7, further comprising:
a recording unit, configured to record vehicle position information of the target vehicle at recording time points during a process that the target vehicle travels from a target start point to a target end point, wherein the target start point is an origin set for the commuting route by a driver, and the target end point is a destination set for the commuting route by the driver;
a forming unit, configured to form a running trajectory of the target vehicle with the recorded vehicle position information; and
a defining unit, configured to define a road consistent with the running trajectory as the commuting route.

12. The automatic driving device according to claim 7, further comprising:
a recording unit, configured to record vehicle position information of the target vehicle at recording time points during a running of the target vehicle;
a forming unit, configured to form a running trajectory of the target vehicle with the recorded vehicle position information;
a determining unit, configured to determine whether the number of times that the target vehicle runs on a road consistent with the running trajectory exceeds a preset threshold within a preset period of time; and
a defining unit, configured to define the road as the commuting route if the number of times that the target vehicle runs on the road consistent with the running trajectory exceeds the preset threshold within the preset period of time.

13. A computer readable storage medium storing instructions, wherein the instructions, when running on a terminal device, cause the terminal device to perform the automatic driving method according to any one of claims 1 to 6.

## Patentansprüche

1. Verfahren zum automatischen Fahren, wobei das Verfahren aufweist:
Bestimmen (101, 401), ob ein Zielfahrzeug auf einer vordefinierten Pendelroute fährt, wobei die Pendelroute eine festgelegte Route ist, auf der das Zielfahrzeug wenigstens zweimal in einer vorbestimmten Zeitspanne fährt;
Erhalten (102, 203, 402) einer Zielfahrinformation, die der Pendelroute entspricht, wenn das Zielfahrzeug auf der vordefinierten Pendelroute fährt, wobei die Zielfahrinformation eine historische Fahrtrajektorie des Zielfahrzeugs auf der Pendelroute aufweist; und
Steuern (103, 204) des Zielfahrzeugs, um ein automatisches Fahren auf der Pendelroute basierend auf der Zielfahrinformation durchzuführen,
wobei das Steuern des Zielfahrzeugs, um basierend auf der Zielfahrinformation ein automatisches Fahren auf der Pendelroute durchzuführen, aufweist:
Bestimmen (403) einer oder mehrerer verfügbarer Fahrspuren der Pendelroute basierend auf der historischen Fahrtrajektorie; und
Auswählen (404) einer der verfügbaren Fahrspuren oder aufeinanderfolgendes Auswählen verschiedener der verfügbaren Fahrspuren während des automatischen Fahrens des Zielfahrzeugs.

2. Verfahren zum automatischen Fahren nach Anspruch 1, wobei das Bestimmen, ob ein Zielfahrzeug auf einer vordefinierten Pendelroute fährt, aufweist:
Erhalten (201) einer derzeitigen Positionsinformation des Zielfahrzeugs und einer Vorwärtsrichtung des Zielfahrzeugs; und
Bestimmen (202) basierend auf der derzeitigen Positionsinformation und der Vorwärtsrichtung des Zielfahrzeugs, ob das Zielfahrzeug auf der vordefinierten Pendelroute fährt.

3. Verfahren zum automatischen Fahren nach Anspruch 1 oder2, wobei die Zielfahrinformation weiter wenigstens eine der folgenden aufweist:
eine Fahrzustandsinformation des Zielfahrzeugs auf der historischen Fahrtrajektorie; und
eine Information über ein Steuerungsverhalten, das durch den Fahrer des Zielfahrzeugs auf der historischen Fahrtrajektorie vorgenommen wird.

4. Verfahren zum automatischen Fahren nach Anspruch 1, wobei die Zielfahrinformation eine Fahrzustandsinformation des Zielfahrzeugs auf der historischen Fahrtrajektorie aufweist, und das Steuern des Zielfahrzeugs, um ein automatisches Fahren auf der Pendelroute basierend auf der Zielfahrinformation durchzuführen, aufweist:
Erzeugen (703) einer Trajektorieinformation basierend auf der Fahrzustandsinformation, wobei die Trajektorieinformation eine oder mehrere der folgenden aufweist: eine Krümmungsinformation von Positionspunkten auf der historischen Fahrtrajektorie, eine Geschwindigkeitsbegrenzungsinformation von wenigstens einem Positionspunkt auf der historischen Fahrtrajektorie, und eine Referenzbereichsinformation eines Lenkradwinkels bei den Positionspunkten auf der historischen Fahrtrajektorie; und
Steuern (704) des Zielfahrzeugs basierend auf der Zielfahrinformation und der Trajektorieinformation, um ein automatisches Fahren auf der Pendelroute durchzuführen.

5. Verfahren zum automatischen Fahren nach Anspruch 1, wobei die Pendelroute definiert ist durch:
Erfassen einer Fahrzeugpositionsinformation des Zielfahrzeugs zu Erfassungszeitpunkten während eines Prozesses, bei dem das Zielfahrzeug von einem Zielstartpunkt zu einem Zielendpunkt fährt, wobei der Zielstartpunkt ein Ausgangspunkt ist, der für die Pendelroute durch einen Fahrer gesetzt wird, und der Zielendpunkt ein Zielpunkt ist, der für die Pendelroute durch den Fahrer gesetzt wird; und
Bilden einer Fahrtrajektorie des Zielfahrzeugs mit der erfassten Fahrzeugpositionsinformation; und
Definieren eines Weges, der mit der Fahrtrajektorie übereinstimmt, als die Pendelroute.

6. Verfahren zum automatischen Fahren nach Anspruch 1, wobei die Pendelroute definiert ist durch:
Erfassen einer Fahrzeugpositionsinformation des Zielfahrzeugs zu Erfassungszeitpunkten während einer Fahrt des Zielfahrzeugs; und
Bilden einer Fahrtrajektorie des Zielfahrzeugs mit der erfassten Fahrzeugpositionsinformation;
Bestimmen, ob die Anzahl von Malen, die das Zielfahrzeug auf einem Weg fährt, der mit der Fahrtrajektorie übereinstimmt, einen festgelegten Schwellwert innerhalb einer festgelegten Zeitspanne übersteigt; und
Definieren des Weges als die Pendelroute, wenn die Anzahl von Malen, die das Zielfahrzeug auf dem Weg fährt, der mit der Fahrtrajektorie übereinstimmt, den festgelegten Schwellwert innerhalb der festgelegten Zeitspanne übersteigt.

7. Vorrichtung zum automatischen Fahren, wobei die Vorrichtung aufweist:
eine Bestimmungseinheit (901), die ausgestaltet ist, zu bestimmen, ob ein Zielfahrzeug auf einer vordefinierten Pendelroute fährt, wobei die Pendelroute eine festgelegte Route ist, auf der das Zielfahrzeug wenigstens zweimal in einer vorbestimmten Zeitspanne fährt;
eine Erhalteeinheit (902), die ausgestaltet ist, eine Zielfahrinformation, die der Pendelroute entspricht, zu erhalten, wenn das Zielfahrzeug auf der vordefinierten Pendelroute fährt, wobei die Zielfahrinformation eine historische Fahrtrajektorie des Zielfahrzeugs auf der Pendelroute aufweist; und
eine Steuerungseinheit (903), die ausgestaltet ist, das Zielfahrzeug zu steuern, um ein automatisches Fahren auf der Pendelroute basierend auf der Zielfahrinformation durchzuführen;
wobei die Steuerungseinheit aufweist:
eine Bestimmungsuntereinheit (9031), die ausgestaltet ist, ein oder mehrere verfügbare Fahrspuren der Pendelroute basierend auf der historischen Fahrtrajektorie zu bestimmen; und
eine Auswahluntereinheit (9032), die ausgestaltet ist, eine der verfügbaren Fahrspuren oder aufeinanderfolgend verschiedene der verfügbaren Fahrspuren während des automatischen Fahrens des Zielfahrzeugs auszuwählen.

8. Vorrichtung zum automatischen Fahren nach Anspruch 7, wobei die Bestimmungseinheit (901) aufweist:
eine Informationserhalteuntereinheit (9011), die ausgestaltet ist, eine derzeitige Positionsinformation des Zielfahrzeugs und eine Vorwärtsrichtung des Zielfahrzeugs zu erhalten; und
eine Routenbestimmungsuntereinheit (9012), die ausgestaltet ist, basierend auf der derzeitigen Positionsinformation und der Vorwärtsrichtung des Zielfahrzeugs zu bestimmen, ob das Zielfahrzeug auf der vordefinierten Pendelroute fährt.

9. Vorrichtung zum automatischen Fahren nach Anspruch 7 oder 8, wobei die Zielfahrinformation weiter wenigstens eine der folgenden aufweist:
eine Fahrzustandsinformation des Zielfahrzeugs auf der historischen Fahrtrajektorie; und
eine Information über ein Steuerungsverhalten, das durch den Fahrer des Zielfahrzeugs auf der historischen Fahrtrajektorie vorgenommen wird.

10. Vorrichtung zum automatischen Fahren nach Anspruch 7, wobei die Zielfahrinformation eine Fahrzustandsinformation des Zielfahrzeugs auf der historischen Fahrtrajektorie aufweist, und die Steuerungseinheit aufweist:
eine Erzeugungsuntereinheit (9033), die ausgestaltet ist, eine Trajektorieinformation basierend auf der Fahrzustandsinformation zu erstellen, wobei die Trajektorieinformation eine oder mehrere der folgenden aufweist: eine Krümmungsinformation von Positionspunkten auf der historischen Fahrtrajektorie, eine Geschwindigkeitsbegrenzungsinformation von wenigstens einem Positionspunkt auf der historischen Fahrtrajektorie, und eine Referenzbereichsinformation eines Lenkradwinkels bei den Positionspunkten auf der historischen Fahrtrajektorie; und
eine Steuerungsuntereinheit (9034), die ausgestaltet ist, das Zielfahrzeug basierend auf der Zielfahrinformation und der Trajektorieinformation zu steuern, um ein automatisches Fahren auf der Pendelroute durchzuführen.

11. Vorrichtung zum automatischen Fahren nach Anspruch 7, die weiter aufweist:
eine Erfassungseinheit, die ausgestaltet ist, eine Fahrzeugpositionsinformation des Zielfahrzeugs zu Erfassungszeitpunkten während eines Prozesses zu erfassen, bei dem das Zielfahrzeug von einem Zielstartpunkt zu einem Zielendpunkt fährt, wobei der Zielstartpunkt ein Ausgangspunkt ist, der für die Pendelroute durch einen Fahrer gesetzt wird, und der Zielendpunkt ein Zielpunkt ist, das für die Pendelroute durch den Fahrer gesetzt wird;
eine Bildeeinheit, die ausgestaltet ist, eine Fahrtrajektorie des Zielfahrzeugs mit der erfassten Fahrzeugpositionsinformation zu bilden; und
eine Definitionseinheit, die ausgestaltet ist, einen Weg, der mit der Fahrtrajektorie übereinstimmt, als die Pendelroute zu definieren.

12. Vorrichtung zum automatischen Fahren nach Anspruch 7, die weiter aufweist:
eine Erfassungseinheit, die ausgestaltet ist, eine Fahrzeugpositionsinformation des Zielfahrzeugs zu Erfassungszeitpunkten während einer Fahrt des Zielfahrzeugs zu erfassen;
eine Bildeeinheit, die ausgestaltet ist, eine Fahrtrajektorie des Zielfahrzeugs mit der erfassten Fahrzeugpositionsinformation zu bilden;
eine Bestimmungseinheit, die ausgestaltet ist, zu bestimmen, ob die Anzahl von Malen, die das Zielfahrzeug auf einem Weg, der mit der Fahrtrajektorie übereinstimmt, einen festgelegten Schwellwert innerhalb einer festgelegten Zeitspanne übersteigt; und
eine Definitionseinheit, die ausgestaltet ist, den Weg als die Pendelroute zu definieren, wenn die Anzahl von Malen, die das Zielfahrzeug auf dem Weg fährt, der mit der Fahrtrajektorie übereinstimmt, den festgelegten Schwellwert innerhalb der festgelegten Zeitspanne übersteigt.

13. Computerlesbares Speichermedium, das Anweisungen speichert, wobei die Anweisungen, wenn sie auf einer Zielvorrichtung laufen, die Zielvorrichtung veranlassen, das Verfahren zum automatischen Fahren nach einem der Ansprüche 1 bis 6 durchzuführen.

## Revendications

1. Procédé de conduite automatique, comprenant :
la détermination (101, 401) si un véhicule cible se déplace sur un itinéraire de trajet prédéfini, dans lequel l'itinéraire de trajet est un itinéraire fixe sur lequel le véhicule cible se déplace au moins deux fois dans une période de temps préétablie ;
l'acquisition (102, 203, 402) d'informations de déplacement cible correspondant à l'itinéraire de trajet si le véhicule cible se déplace sur l'itinéraire de trajet prédéfini, dans laquelle les informations de déplacement cible comprennent une trajectoire de circulation historique du véhicule cible sur l'itinéraire de trajet ; et
la commande (103, 204) du véhicule cible pour réaliser une conduite automatique sur l'itinéraire de trajet sur la base des informations de trajet cible,
dans lequel la commande du véhicule cible pour réaliser une conduite automatique sur l'itinéraire de trajet sur la base des informations de déplacement cible comprend :
la détermination (403) d'une ou de plusieurs voies disponibles de l'itinéraire de trajet sur la base de la trajectoire de circulation historique ; et
la sélection (404) de l'une des voies disponibles ou la sélection de différentes voies parmi les voies disponibles successivement, pendant la conduite automatique du véhicule cible.

2. Procédé de conduite automatique selon la revendication 1, dans lequel la détermination si un véhicule cible se déplace sur un itinéraire de trajet prédéfini comprend :
l'acquisition (201) d'informations de position actuelle du véhicule cible et d'une direction d'avance du véhicule cible ; et
la détermination (202) si le véhicule cible se déplace sur l'itinéraire de trajet prédéfini sur la base d'informations de position actuelle et de la direction d'avance du véhicule cible.

3. Procédé de conduite automatique selon la revendication 1 ou 2, dans lequel les informations de déplacement cible comprennent en outre au moins l'une parmi :
des informations d'état de circulation du véhicule cible dans la trajectoire de circulation historique ; et
des informations sur un comportement de commande réalisé par le conducteur sur le véhicule cible dans la trajectoire de circulation historique.

4. Procédé de conduite automatique selon la revendication 1, dans lequel les informations de déplacement cible comprennent des informations d'état de circulation du véhicule cible dans la trajectoire de circulation historique, et la commande du véhicule cible pour réaliser une conduite automatique sur l'itinéraire de trajet sur la base des informations de déplacement cible comprend :
la génération (703) d'informations de trajectoire sur la base des informations d'état de circulation, dans lequel les informations de trajectoire comprennent une ou plusieurs parmi : des informations de courbure de points de position dans la trajectoire de circulation historique, des informations de limite de vitesse d'au moins un point de position dans la trajectoire de circulation historique, des informations de plage de référence d'angles de volant aux points de position dans la trajectoire de circulation historique ; et
la commande (704) du véhicule cible pour réaliser une conduite automatique sur l'itinéraire de trajet sur la base des informations de déplacement cible et des informations de trajectoire.

5. Procédé de conduite automatique selon la revendication 1, dans lequel l'itinéraire de trajet est défini par :
l'enregistrement d'informations de position de véhicule du véhicule cible à des instants d'enregistrement au cours d'un processus que le véhicule cible effectue d'un point de départ cible à un point d'arrivée cible, dans lequel le point de départ cible est une origine définie pour l'itinéraire de trajet par un conducteur, et le point d'arrivée cible est une destination définie pour l'itinéraire de trajet par le conducteur ;
la formation d'une trajectoire de circulation du véhicule cible avec les informations de position de véhicule enregistrées ; et
la définition d'une route cohérente avec la trajectoire de circulation en tant qu'itinéraire de circulation.

6. Procédé de conduite automatique selon la revendication 1, dans lequel l'itinéraire de trajet est défini par :
l'enregistrement d'informations de position de véhicule du véhicule cible à des instants d'enregistrement pendant un circulation du véhicule cible ;
la formation d'une trajectoire de circulation du véhicule cible avec les informations de position de véhicule enregistrées ;
la détermination si le nombre de fois que le véhicule cible circule sur une route cohérente avec la trajectoire de circulation dépasse un seuil préétabli dans une période de temps préétablie ; et
la définition de la route en tant qu'itinéraire de trajet si le nombre de fois que le véhicule cible circule sur la route conformément à la trajectoire de circulation dépasse le seuil préétabli dans la période de temps préétablie.

7. Dispositif de conduite automatique comprenant : une unité de détermination (901), configurée pour déterminer si un véhicule cible se déplace sur un itinéraire de trajet prédéfini, dans lequel l'itinéraire de trajet est un itinéraire fixe sur lequel le véhicule cible se déplace au moins deux fois dans une période de temps préétablie ;
une unité d'acquisition (902), configurée pour acquérir des informations de déplacement cible correspondant à l'itinéraire de trajet si le véhicule cible se déplace sur l'itinéraire de trajet prédéfini, dans lequel les informations de déplacement cible comprennent une trajectoire de circulation historique du véhicule cible sur l'itinéraire de trajet ; et
une unité de commande (903), configurée pour commander le véhicule cible pour réaliser une conduite automatique sur l'itinéraire de trajet sur la base des informations de déplacement cible,
dans lequel l'unité de commande comprend :
une sous-unité de détermination (9031), configurée pour déterminer une ou plusieurs voies disponibles de l'itinéraire de trajet sur la base de la trajectoire de circulation historique ; et
une sous-unité de sélection (9032), configurée pour sélectionner l'une des voies disponibles ou sélectionner successivement celles différentes des voies disponibles, pendant la conduite automatique du véhicule cible.

8. Dispositif de conduite automatique selon la revendication 7, dans lequel l'unité de détermination (901) comprend :
une sous-unité d'acquisition d'informations (9011), configurée pour acquérir des informations de position actuelle du véhicule cible et d'une direction d'avance du véhicule cible ; et
une sous-unité de détermination d'itinéraire (9012), configurée pour déterminer si le véhicule cible se déplace sur l'itinéraire de trajet prédéfini sur la base des informations de position actuelle et de la direction d'avance du véhicule cible.

9. Dispositif de conduite automatique selon la revendication 7 ou 8, dans lequel les informations de déplacement cible comprennent en outre au moins une parmi :
des informations d'état de circulation du véhicule cible dans la trajectoire de circulation historique ;
des informations concernant un comportement de commande réalisé par le conducteur sur le véhicule cible dans la trajectoire de circulation historique.

10. Dispositif de conduite automatique selon la revendication 7, dans lequel les informations de déplacement cible comprennent des informations d'état de circulation du véhicule cible dans la trajectoire de circulation historique, et l'unité de commande comprend :
une sous-unité de génération (9033), configurée pour générer des informations de trajectoire sur la base des informations d'état de circulation, dans laquelle les informations de trajectoire comprennent une ou plusieurs parmi: des informations de courbure de points de position dans la trajectoire de circulation historique, des informations de limite de vitesse d'au moins un point de position dans la trajectoire de circulation historique, des informations de plage de référence d'angles de volant aux points de position dans la trajectoire de circulation historique ; et
une sous-unité de commande (9034), configurée pour commander le véhicule cible afin de réaliser une conduite automatique sur l'itinéraire de trajet sur la base des informations de déplacement cible et des informations de trajectoire.

11. Dispositif de conduite automatique selon la revendication 7, comprenant en outre :
une unité d'enregistrement, configurée pour enregistrer des informations de position de véhicule du véhicule cible à des instants d'enregistrement pendant un processus que le véhicule cible effectue d'un point de départ cible à un point d'arrivée cible, dans lequel le point de départ cible est une origine définie pour l'itinéraire de trajet par un conducteur, et le point d'arrivée cible est une destination définie pour l'itinéraire de trajet par le conducteur ;
une unité de formation, configurée pour former une trajectoire de circulation du véhicule cible avec les informations de position de véhicule enregistrées ; et
une unité de définition, configurée pour définir une route cohérente avec la trajectoire de circulation en tant qu'itinéraire de trajet.

12. Dispositif de conduite automatique selon la revendication 7, comprenant en outre :
une unité d'enregistrement, configurée pour enregistrer des informations de position de véhicule du véhicule cible à des instants d'enregistrement pendant une circulation du véhicule cible ;
une unité de formation, configurée pour former une trajectoire de déplacement du véhicule cible avec les informations de position de véhicule enregistrées ;
une unité de détermination, configurée pour déterminer si le nombre de fois que le véhicule cible circule sur une route cohérente avec la trajectoire de circulation dépasse un seuil préétabli dans une période de temps préétablie ; et
une unité de définition, configurée pour définir la route en tant qu'itinéraire de trajet si le nombre de fois que le véhicule cible circule sur la route cohérente avec la trajectoire de circulation dépasse le seuil préétabli dans la période de temps préétablie.

13. Support de stockage lisible par ordinateur stockant des instructions, dans lequel les instructions, lorsqu'elles s'exécutent sur un dispositif terminal, amènent le dispositif terminal à réaliser le procédé de conduite automatique selon l'une quelconque des revendications 1 à 6.
